Europäisches Patentamt

European Patent Office

Office européen des brevets

(19)

(11) Numéro de publication: **0 011 538**
**A1**

## (12) DEMANDE DE BREVET EUROPEEN

(21) Numéro de dépôt: **79400810.2**

(22) Date de dépôt: **31.10.79**

(51) Int. Cl.³: **B 29 C 1/02**

(30) Priorité: **16.11.78 FR 7832327**
**01.12.78 FR 7833917**
**16.03.79 FR 7906692**

(43) Date de publication de la demande:
**28.05.80 Bulletin 80/11**

(84) Etats Contractants Désignés:
**DE GB IT**

(71) Demandeur: **SOCIETE IMMOBILIERE ET FINANCIERE**
**SUCHET-ALFORT (S.I.F.S.A.)**
**4, rue Suchet**
**F-94701 Maisons-Alfort(FR)**

(72) Inventeur: **Gras, Elie**
**Le Ronzin**
**F-69730 Genay(FR)**

(74) Mandataire: **Cuer, André**
**CABINET CUER 30, rue de Léningrad**
**F-75008 Paris(FR)**

(54) **Moule pour la fabrication d'objets conformés en matière plastique par chauffage sous haute fréquence, et son procédé de fabrication.**

(57) Le nouveau moule, constitué en deux parties (1) (2) qui coopèrent, est essentiellement caractérisé en ce que la demi-maquette (ou contre-moule) inférieure repose sur une membrane détachable (9) de silicone pur ou analogue servant d'écran calorifique et jouxtant une croche (11) de silicone (ou analogue) chargé à 80-120 % de poudre d'Al, 1'ensemble étant isolé dans un cadre (12) en polypropylène ou analogue et la structure externe étant par exemple en aluminium. La maquette (6) est réalisée en silicone chargée à 20-30 % de poudre d'Al. La matière à mouler est introduite dans l'espace (13) créé entre les deux parties due contre-moule. Le moulage par l'action de la haute fréquence est rapide et le refroidissement se produit très vite du fait de la structure interne précitée.

Application au moulage par haute-fréquence d'objets de toutes conformations avec ou non formation de peaux superficielles, dont des semelles de chaussures de plusieurs couleurs et à reliefs distincts.

FIG: 1

EP 0 011 538 A1

Moule pour la fabrication d'objets conformés en matière plastique par chauffage sous haute fréquence, et son procédé de fabrication.

_____

La présente invention a trait au domaine de la fabrication d'objets moulés en matière plastique par chauffage haute fréquence sous pression de poudre plastique disposée dans un moule creux muni d'un relief correspondant aux dessins à obtenir sur lesdits objets. Elle concerne plus particulièrement un nouveau procédé de réalisation d'un tel moule, permettant de mieux répartir le champ haute fréquence et d'accélérer le refroidissement des pièces moulées après chauffage. Elle a également pour objets les moules obtenus par ledit procédé et leur application à la production d'objets moulés de tous types, comme par exemple des semelles de chaussures, des articles de maroquinerie ou autres produits.

Il est maintenant bien connu d'obtenir divers objets moulés, par exemple des parties constitutives de tiges et empeignes pour chaussures ou des articles de maroquinerie, par remplissage à l'aide d'une matière plastique, telle que chlorure de polyvinyle en poudre ou sous forme de plastisol, des parties creuses d'un moule constituant les négatifs du dessin à reproduire puis, après éventuelle application sur le moule d'un matériau qui constituera la doublure, par chauffage haute fréquence (H.F.) sous pression de l'ensemble sandwich, après quoi un refroidissement permet d'obtenir un démoulage instantané de l'objet conformé en matière plastique. Une telle technique, avec ses diverses variantes, ainsi que les appareillages appropriés ont déjà été décrits dans une série de brevets d'invention de la Société demanderesse.

On sait qu'en soumettant un matériau diélectrique, par exemple une matière plastique macromoléculaire, à des courants dont les fréquences correspondent à la résonance moléculaire du matériau en cause, on obtient un échauffement dû aux pertes diélectriques. Par exemple, dans la technique susvisée, on soumet généralement de la poudre de chlorure de polyvinyle(PVC) à des fréquences d'environ 27 mégacycles ou plus, sous pression, dans des moules en élastomère de silicone, pour obtenir en moins de une minute des objets conformés correspondant aux dessins du moule. Ce dernier est en pratique confectionné à partir d'un mélange de silicone avec une poudre métallique, telle que de l'aluminium, de façon à assurer une meilleure répartition du champ HF et permettre un meilleur refroidissement du PVC moulé.

Dans ce chauffage HF par pertes diélectriques, la chaleur prend naissance au sein même du matériau à chauffer et, plus le volume de matière à chauffer est important, plus le dégagement des calories se fera rapidement. Par exemple, une surface de PVC de 1000 cm2 et d'une épaisseur de 5 mm sera chauffée à 180°C en un temps de 20 secondes alors que la même surface de PVC avec une épaisseur de 0,5mm seulement demandera un temps de chauffage nettement supérieur, parfois jusqu'à 30 secondes ; ceci pour une même puissance appliquée de H.F.

Malgré cette capacité de chauffage rapide d'objets d'assez grand volume, la haute fréquence a été peu utilisée pour le moulage d'articles de forte épaisseur du fait, notamment, que l'on n'a pas proposé jusqu' ici de moules aptes à être mis en oeuvre dans des conditions techniques et financières satisfaisantes.

L'invention a pour but de remédier à cette carence et de proposer une nouvelle conception de moule permettant en particulier d'une part d'obtenir une répartition uniforme du champ de haute fréquence selon tous les contours de la pièce à mouler, quelle que soit la forme et les dimensions de cette dernière et, d'autre part, d'assurer un refroidissement rapide de cette pièce après son chauffage.

Le nouveau moule selon l'invention est essentiellement caractérisé en ce qu'il comprend :

a) une partie inférieure constituée par une structure externe métallique comportant au moins un emplacement représentant en creux la configuration générale d'un objet à reproduire et renfermant à l'intérieur :

᠆ dans la zone entourant ledit emplacement, une première couche relativement épaisse de matière plastique à faibles pertes diélectriques, chargée à au moins 80 % de poudre métallique puis une deuxième couche mince de ladite matière plastique pure exempte de charge ;

- à l'extérieur de ladite zone et remplissant tout le volume restant disponible, un matériau isolant pour la haute fréquence ;

- au fond dudit emplacement, la moitié inférieure de la maquette ou contre-moule de l'objet à mouler ;

b) une partie supérieure constituée par une plaque métallique comportant la moitié supérieure de la maquette ou contre-moule de l'objet à mouler, consistant en ladite matière plastique avec au moins 20 % de charge métallique ; cette partie supérieure, après insertion du matériau destiné à la fabrication de l'objet à mouler dans les interstices et creux de ladite moitié inférieure de maquette, étant positionnée à l'aide de goujons sur la partie inférieure du moule puis soumise à l'action du courant haute-fréquence.

L'invention a également pour objet un procédé de confection du moule susvisé, selon la combinaison des étapes suivantes :

- pose d'une maquette correspondant à l'objet à mouler sur une plaque métallique mince, ajourée sur sa face intérieure ;

- enrobage de la maquette par une cire à modeler ;

- positionnement autour de cette forme d'un cadre en un matériau isolant pour la haute fréquence ;

- coulée, dans l'espace libre entre la maquette recouverte de cire et le cadre, d'une matière plastique à faibles pertes diélectriques chargée à au moins 80 % de poudre métallique ;

- après prise de la matière plastique, démoulage de celle-ci, enlèvement de la cire puis coulée sous pression, grâce à des ouvertures aménagées sur le cadre ou la plaque métallique, de résine de matière plastique à faibles pertes diélectriques pure et donc exempte de charges, ladite résine comblant l'espace libre laissé lors de l'extraction de la cire ;

- repositionnement de la maquette dans le moule pour obtenir le contre-moule par projection d'un vernis d'isolation puis coulée de la résine de matière plastique précitée avec au moins 20 % de poudre métallique ;

- mise en place, au-dessus de ce contre-moule d'une plaque métallique de rigidification pour constituer ladite partie supérieure du moule.

En pratique, bien que d'autres matériaux puissent être utilisés dans le cadre de l'invention, il a été trouvé commode et particulièrement avantageux de mettre en oeuvre : comme éléments métalliques, des plaques en aluminium ou alliages d'Al ; comme matière plastique à faibles pertes diélectriques une résine de silicone utilisée, selon les phases précitées du procédé , soit pure soit chargée avec de la poudre d'aluminium (par exemple à 80-120 % pour ladite première couche et 20-30 % pour la couche constituant la moitié supérieure de ladite maquette) ; comme matériau isolant, une polyoléfine telle que par exemple du polypropylène ; et, comme vernis d'isolation un vernis acrylique ou autre produit équivalent.

Conformément à une variante du procédé susvisé, il s'avère particulièrement avantageux, lors de la fabrication d'un tel moule, de rendre démontable la membrane de résine pure (par exemple silicone) par

0011538

rapport à la couche de résine conductrice. Pour obtenir ce résultat, il suffit - dans le procédé ci-dessus - de passer un vernis d'isolation (par exemple acrylique ou autre) sur la couche de résine chargée à 80-120 % de métal et, après séchage, d'injecter comme déjà décrit sous légère pression la résine caoutchouteuse pure de silicone ou analogue.

Grâce à ce perfectionnement, on peut réaliser avec le même moule des objets conformés dont la forme varie, à un degré plus ou moins important, selon les modèles ; par exemple des semelles de chaussures, articles de maroquinerie ou autres objets dont une série se distingue de la précédente par certaines variations de relief et/ou de dessins. Il suffit en effet, sans changer le moule de base, d'enlever la membrane de silicone servant de contre-maquette inférieure et de la remplacer par une membrane en même matière comportent les modifications souhaitées. On améliore encore l'efficacité et réalise ainsi des économies par rapport à la technique susdécrite.

L'invention sera mieux comprise par la description, à titre illustratif, de modes de réalisation non limitatifs par référence aux dessins annexés qui représentent :

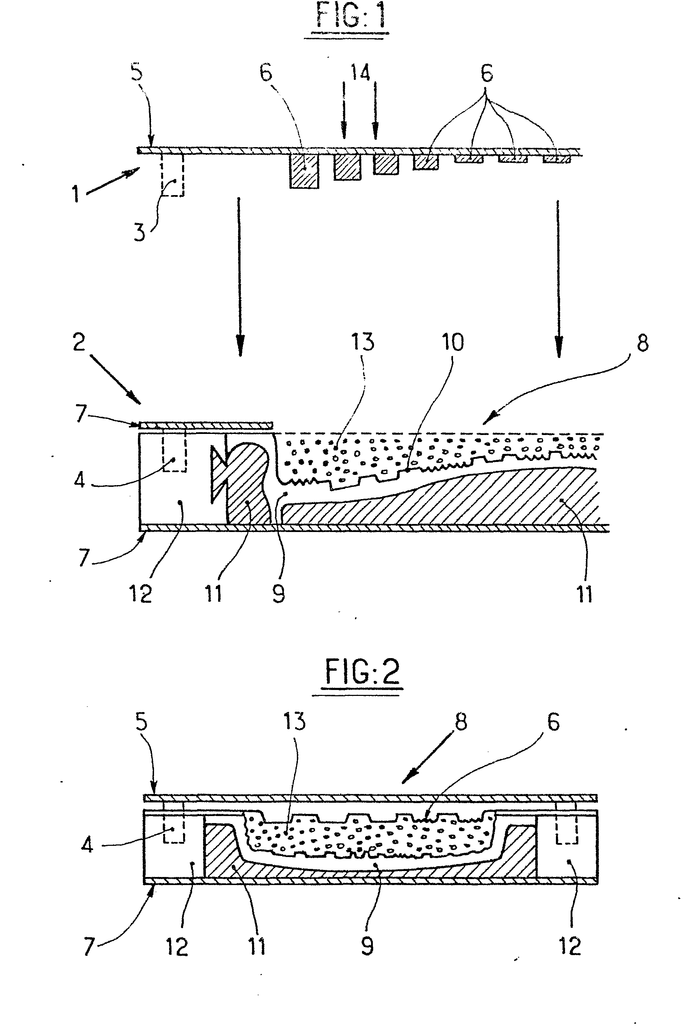

. Figure 1 : une vue en coupe, au niveau d'un emplacement creux d'un objet à mouler, des principaux éléments constitutifs d'un moule selon l'invention ;

. Figure 2 : une vue latérale en coupe de ce même moule montrant la totalité d'un emplacement destiné à la réalisation de l'objet moulé.

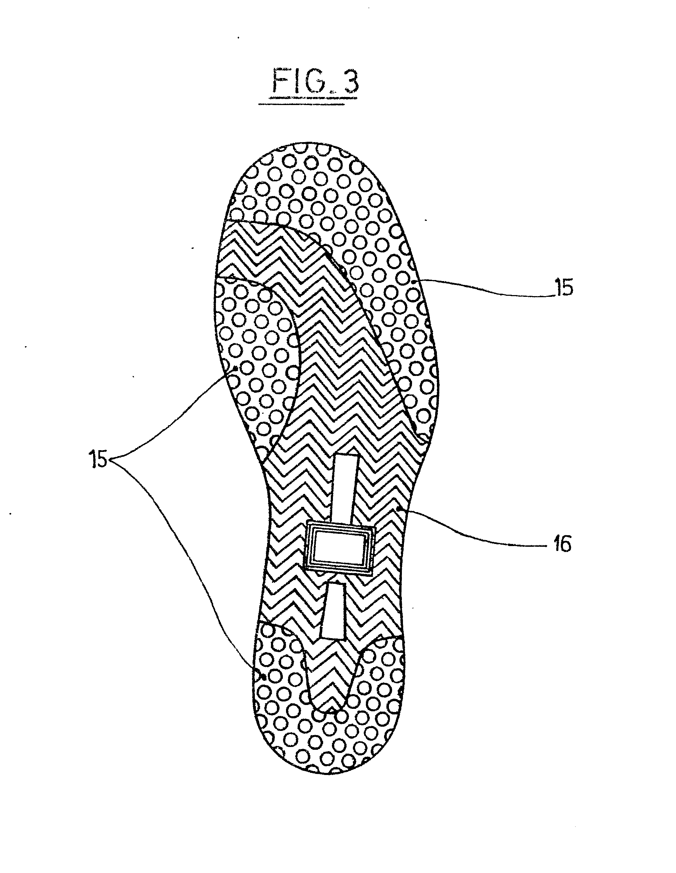

. Figure 3 : une application du moule à la réalisation d'objets multicolores.

On a choisi à titre d'exemple la fabrication d'un moule destiné à la production, par chauffage haute fréquence, de semelles de chaussures, un tel moule pouvant comporter deux emplacements en creux pour la production, en une seule opération, des deux semelles d'une paire de chaussures. Il est bien évident cependant que la même structure sera utilisée dans le cas de formes et de contours différents pour la production d'objets moulés les plus variés.

Comme on peut le voir sur la figure 1, un moule selon l'invention est constitué en deux parties 1 et 2, la partie supérieure 1 pouvant se plaquer sur la partie inférieure 2 par introduction des goujons 3 dans les cavités 4. Le haut 1 du moule comporte une plaque d'aluminium 5 sur laquelle est fixée la moitié supérieure 6 de la maquette ou contre-moule de l'objet à mouler. Les éléments 6 sont constitués par un caoutchouc de silicone (obtenu de façon bien connue à partir de Silastène et d'un catalyseur) chargé par

20 à 30 % en poids de poudre métallique telle que par exemple de l'aluminium.

La partie inférieure 2 du moule est réalisée dans une carapace extérieure 7 en aluminium ménageant les emplacements en creux 8 destinés au logement des portions de maquettes et de la matière pour l'objet à mouler. Ces emplacements comportent : une zone 9 en silicone pur, exempt de charges, qui entoure le dessin de la portion 10 de maquette et de préférence sous forme de membrane détachable ; puis une couche 11 de caoutchouc de silicone chargé à 80-120 % de poudre d'aluminium, l'ensemble étant noyé dans un cadre isolant 12, par exemple en résine de polypropylène. La matière destinée à la confection de l'objet moulé, par exemple un plastisol, de la poudre ou encore des granulés de chlorure de polyvinyle - est introduite dans l'espace 13 aménagé entre les deux parties 6-10 du contre-moule.

Pour fabriquer un tel moule, on dépose une maquette correspondant à l'objet à mouler sur une plaque mince en aluminium 7, de préférence ajourée à l'intérieur et servant ainsi de plan de joint précis. On enrobe ensuite la maquette à l'aide de cire molle puis on positionne autour de la forme un cadre en matière isolante 12. On coule alors, dans l'espace libre entre la maquette et le cadre, un mélange 11 de silicone et de poudre d'aluminium (par exemple 80-90 % en poids d'Al) puis, après prise à froid de ce mélange, on le démoule, on retire la cire et l'on injecte sous légère pression (par exemple 2 à 3 kg/cm2), grâce à des ouvertures ménagées sur le cadre 12, une résine caoutchouteuse pure de silicone 9, exempt de charges, laquelle sert à combler le volume laissé par la cire. On reproduit ainsi fidèlement les reliefs et les contours de la maquette. Puis on repositionne la maquette pour tirer la partie inverse 6 du moule en passant un vernis isolant, par exemple au pistolet, et en faisant couler un mélange de caoutchouc de silicone avec 20 à 30 % de poudre d'aluminium. Après prise de ce mélange, on met en place par dessus une plaque d'aluminium 5 de deux à trois millimètres d'épaisseur qui sert à rigidifier le contre-moule 6.

Pour l'opération de moulage, la haute fréquence est amenée sur la partie supérieure 1 du moule selon les flèches 14 ; elle échauffe la matière 13 et se répartit uniformément dans toutes les directions sur les contours de la maquette du fait que la couche 11, qui épouse la forme de l'objet à mouler, se comporte comme une masse. La membrane 9 en silicone pur permet l'échauffement de la matière et joue le rôle d'écran calorifique. Par ailleurs, le refroidissement ultérieur de l'objet est très rapide car la membrane 9 est mince (épaisseur 2 à 3mm environ) et jouxte immédiatement une masse fortement chargée en aluminium (couche 11).

0011538

En pratique, les moules selon l'invention peuvent avantageusement être mis en oeuvre dans les appareils fonctionnant selon le principe du plateau tournant (ou " carroussel ") avec une série de presses à chauffage et refroidissement au sein desquelles est disposé chaque moule, par exemple selon l'installation décrite dans le brevet français N°75.27466 de la Demanderesse.

Grâce à la nouvelle technique précitée, on peut fabriquer des moules dont le coût est considérablement moins élevé(jusqu'à 10 fois ou plus) que celui des moules traditionnels à injection. Par ailleurs, on réalise de substantielles économies d'énergie lors du moulage du fait que le chauffage de la matière à mouler est quasi-instantané. D'autres avantages sont encore procurés par l'invention : par exemple il devient possible d'obtenir, à partir du chlorure de polyvinyle (PVC)ou autre matière plastique, des pièces expansées comportant une peau superficielle décorée ou non, qui est particulièrement appréciée dans de nombreuses applications comme par exemple les articles d'ameublement, les garnitures automobiles ou autres objets. L'obtention d'une telle peau est particulièrement appréciable lorsqu'on utilise comme matériau de moulage du PVC ou analogue car on sait que pour parvenir à ce résultat dans les autres techniques de moulage, par exemple par injection, il faut mettre en oeuvre des matières plastiques spéciales et généralement plus coûteuses comme par exemple des polyuréthannes.

Conformément à une autre application intéressante, selon l'invention, on peut réaliser dans les moules précités des objets présentant des variations de relief et/ou de dessins et, tout particulièrement, des objets multicolores Il suffit à cet. effet de disposer dans la membrane du moule une ou plusieurs pièces (ou inserts) d'une couleur et d'un relief donnés, déjà moulés auparavant par ailleurs, puis de combler les parties vides du moule de poudre de chlorure de polyvinyle ou analogue et ensuite effectuer le chauffage HF sous pression comme indiqué ci-dessus.

Ce type d'application fait l'objet de la figure 3 du dessin annexé représentant une semelle de chaussure à plusieurs dessins et couleurs obtenue dans le moule selon l'invention.

Pour obtenir une semelle de ce type, ici à deux couleurs, par exemple avec des parties rouges 15 constituées par des microventouses favorisant l'adhérence au sol et une zone blanche 16 munie d'un dessin à chevrons, on confectionne séparément par moulage haute fréquence les inserts 15 et on les dispose, selon l'arrangement convenable, dans la partie inférieure du moule (membrane détachable plastique) selon l'invention, normalement destiné à la fabrication de semelles à dessin en chevrons. On comble les vides à l'aide de poudre de chlorure de polyvinyle puis on effectue le moulage de façon connue par chauffage haute fréquence. On obtient ainsi une semelle bicolore de très bel aspect où les parties 15 et 16 sont parfaitement associées et soudées entre elles.

Bien entendu, on peut réaliser de cette façon des combinaisons de plus de deux couleurs avec des dessins en relief identiques ou différents, ceci pour les objets conformés les plus divers.

L'invention n'est pas limitée aux modes d'exécution susdécrits et s'étend à tous les moyens équivalents et aux applications les plus diverses.

REVENDICATIONS

1. Moule pour la fabrication d'objets conformés en matière plastique par chauffage de cette dernière sous haute fréquence, caractérisé en ce qu'il comprend :

a) une partie inférieure constituéé par une structure externe métallique comportant au moins un emplacement représentant en creux la configuration générale d'un objet à reproduire et renfermant à l'intérieur :

- dans la zone entourant ledit emplacement : une première couche relativement épaisse de matière plastique à faibles pertes diélectriques, chargé à au moins 80 % de poudre métallique puis une deuxième couche mince de ladite matière plastique pure exempte de charge ;

- à l'extérieur de ladite zone et remplissant tout le volume restant disponible, un matériau isolant pour la haute fréquence ;

- au fond dudit emplacement, la moitié inférieure de la maquette ou contre-moule de l'objet à mouler ;

b) une partie supérieure constituée par une plaque métallique comportant la moitié supérieure de la maquette ou contre-moule de l'objet à mouler consistant en ladite matière plastique avec au moins 20 % de charge métallique ; cette partie supérieure, après insertion du matériau destiné à la fabrication de l'objet à mouler dans les interstices et creux de ladite moitié inférieure de maquette, étant positionnée à l'aide de goujons sur la partie inférieure du moule puis soumise à l'action du courant haute-fréquence.

2. Moule selon la revendication 1, caractérisé en ce que ses éléments métalliques sont en aluminium, alors que la matière plastique desdites couches est en silicone, la charge métallique étant de la poudre d'aluminium, et que le matériau isolant est constitué par une polyoléfine comme du polypropylène.

3. Moule selon l'une quelconque des revendications 1 ou 2, caractérisé en ce que la première couche de matière plastique en silicone renferme 80 à 120 % de poudre d'aluminium alors que la couche de matière plastique, également en silicone, qui fait partie de la partie supérieure du moule, contient 20 à 30 % de poudre d'aluminium.

4. Moule selon l'une quelconque des revendications 1 à 3, caractérisé en ce que la couche mince ou membrane de matière plastique pure exempte de charge, dans ladite partie supérieure, est détachable de la couche de matière plastique chargée de poudre métallique.

5. Procédé de fabrication d'un moule selon la revendication 1, caractérisé en ce que l'on met en oeuvre la succession des étapes suivantes :

- pose d'une maquette correspondant à l'objet à mouler sur une plaque métallique mince, ajourée sur sa face intérieure ;

– enrobage de la maquette par une cire à modeler ;

– positionnement autour de cette forme d'un cadre en matériau isolant pour la haute fréquence ;

– coulée, dans l'espace libre entre la maquette recouverte de cire et le cadre, d'une matière plastique à faibles pertes diélectriques chargée à au moins 80 % de poudre métallique ;

– après prise de la matière plastique, démoulage de celle-ci, enlèvement de la cire puis coulée sous pression, grâce à des ouvertures aménagées sur le cadre ou la plaque métallique, de résine de matière plastique à faibles pertes diélectriques pure et donc exempte de charges, ladite résine comblant l'espace libre laissé lors de l'extraction de la cire ;

– repositionnement de la maquette dans le moule pour obtenir le contre-moule par projection d'un vernis d'isolation puis coulée de la résine de matière plastique précitée avec au moins 20 % de poudre métallique ;

– mise en place au-dessus de ce contre-moule d'une plaque métallique de rigidification pour constituer ladite partie supérieure du moule.

6. Procédé selon la revendication 4, caractérisé en ce que : les plaques métalliques sont en aluminium, la matière plastique est une résine de silicone, la charge métallique est de la poudre d'aluminium et le matériau isolant est une polyoléfine comme du polypropylène.

7. Procédé selon la revendication 4, caractérisé en ce que, après coulée et prise de la matière plastique chargée à au moins 80 % de poudre métallique, et avant injection ou coulée sous pression de la résine exempte de charges, on applique sur la couche plastique chargée un vernis d'isolation jouant le rôle d'enduit anti-adhérent pour cette dernière couche.

8. Application du moule selon l'une quelconque des revendications 1 à 4 et du procédé selon l'une quelconque des revendications 4 à 6, à la réalisation d'objets moulés de toute configuration par chauffage sous haute fréquence à partir de matières plastiques sous forme de poudre, de granulés ou plastisol.

9. Application du moule selon la revendication 8, caractérisée en ce que la matière plastique est constituée par du chlorure de polyvinyle.

10. Application du moule selon l'une quelconque des revendications 8 ou 9, caractérisée en ce que les objets moulés sont constitués par des semelles de chaussures, pouvant présenter des variantes de reliefs et/dessins ainsi qu'à motifs diversement colorés.

FIG: 1

FIG: 2

## FIG. 3

0011538

Numéro de la demande

EP 79 40 0510

Office européen
des brevets

RAPPORT DE RECHERCHE EUROPEENNE

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 372 009 (GRAS) <br> * Revendications 1-5 * <br> -- | 1 | B 29 C 1/02 |
| A | FR - A - 2 185 486 (KURARAY) <br> * Page 5, lignes 1-4; page 7, lignes 15-39 * <br> -- | 1 | |
| A | FR - A - 2 190 582 ( GRAS) <br> * Revendications * <br> ---- | 1 | DOMAINES TECHNIQUES RECHERCHES (Int. Cl. 3) <br><br> B 29 C |

CATEGORIE DES DOCUMENTS CITES

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
   document correspondant

Le présent rapport de recherche a été établi pour toutes les revendications

| Lieu de la recherche | Date d'achevement de la recherche | Examinateur |
|---|---|---|
| La Haye | 20-02-1980 | SCHMIDL |

OEB Form 1503.1   06.78